# EUROPÄISCHE PATENTSCHRIFT

(11) **EP 3 688 951 B1**
(45) Veröffentlichungstag und Bekanntmachung des Hinweises auf die Patenterteilung: **23.08.2023**
(21) Anmeldenummer: 18773165.8
(22) Anmeldetag: 19.09.2018
(51) Int. Cl.: H04L 9/40, H04L 67/12

(54) **VERFAHREN ZUM ERFASSEN EINES ANGRIFFS AUF EIN STEUERGERÄT EINES FAHRZEUGS**
METHOD FOR DETECTING AN ATTACK ON A CONTROL DEVICE OF A VEHICLE
PROCÉDÉ DE DÉTECTION D'UNE ATTAQUE MENÉE CONTRE UN CALCULATEUR D'UN VÉHICULE

(30) Priorität: 27.09.2017 DE 102017217195
(43) Veröffentlichungstag der Anmeldung: 05.08.2020
(73) Patentinhaber: Continental Automotive Technologies GmbH, 30165 Hannover (DE)
(72) Erfinder: DO CARMO, Rodrigo Daniel, 60326 Frankfurt am Main (DE); SCHNEIDER, Michael Gerhard, 65760 Eschborn (DE)
(74) Vertreter: Continental Corporation
(86) Internationale Anmeldenummer: PCT/EP2018/075298
(87) Internationale Veröffentlichungsnummer: WO 2019/063374

(56) Entgegenhaltungen:
- EP-A2- 1 342 622
- WO-A1-2013/144962
- DE-A1-102015 205 670
- GB-A- 2 548 371

## Beschreibung

Die Erfindung betrifft ein Verfahren zum Erfassen eines Angriffs, insbesondere eines Cyberangriffs, auf ein Steuergerät eines Fahrzeugs, mit dem Schritt: Prüfen von Kommunikationsdaten, welche über zumindest einen mit dem Steuergerät verbundenen Kommunikationskanal des Fahrzeugs übertragen werden.

Die Erfindung betrifft außerdem ein Kommunikationssystem für ein Fahrzeug, mit zumindest einem Steuergerät und einem Angriffserfassungssystem, welches Bestandteil des Steuergeräts oder mit dem Steuergerät signalleitend verbunden ist, wobei das Angriffserfassungssystem dazu eingerichtet ist, Kommunikationsdaten, welche über zumindest einen mit dem Steuergerät verbundenen Kommunikationskanal des Fahrzeugs übertragen werden, zu prüfen.

Darüber hinaus betrifft die Erfindung ein Fahrzeug, insbesondere ein Automobil, mit einem Kommunikationssystem.

GB 2548371 A zeigt eine konfigurierbare Fahrzeug-Firewall-Einrichtung, welche Datenverkehr oder Datenpakete filtert, die zwischen einem Hauptfahrzeugbus eines Fahrzeugs (dem Innenbus) und einem potenziell unsicheren Bus (dem Außenbus) gesendet werden. Das Gerät kann über eine Hardware-Verriegelung verfügen, um die Filterung von Nachrichten auf der Grundlage des physikalischen Zustands des Fahrzeugs zu steuern (z.B. ein physikalischer Schlüssel, der in einem Schloss in eine bestimmte Position gedreht wird).

Moderne Fahrzeuge weisen neben den fahrzeuginternen Kommunikationskanälen regelmäßig eine oder mehrere Kommunikationsschnittstellen auf, über welche schadhafte Daten in die Kommunikationssysteme entsprechender Fahrzeuge eingebracht werden können. Durch derartige Daten können insbesondere elektronische Steuergeräte von Fahrzeugen angegriffen werden, woraus eine Funktionsbeeinträchtigung oder ein Funktionsausfall eines Steuergeräts oder eines Fahrzeugs resultieren kann.

Aus dem Stand der Technik sind bisher keine wirksamen und gleichzeitig ressourcenschonenden Lösungen bekannt, mittels welchen entsprechende Cyberangriffe auf Fahrzeuge erkannt oder verhindert werden können.

Aufgabe der vorliegenden Erfindung ist es somit, den Schutz von Fahrzeugen gegen Cyberangriffe zu erhöhen.

Die Aufgabe wird gelöst durch ein Verfahren der eingangs genannten Art, wobei das Prüfen der Kommunikationsdaten, welche über den zumindest einen mit dem Steuergerät verbundenen Kommunikationskanal des Fahrzeugs übertragen werden, eine Untersuchung umfasst, ob die über den zumindest einen Kommunikationskanal des Fahrzeugs übertragenen Kommunikationsdaten Datenerfordernisse erfüllen, welche durch eine oder mehrere veränderbare Regeln definiert sind, wobei das Steuergerät als Klient-Steuergeräteines fahrzeuginternen Netzwerks betrieben wird und wobei das Prüfen der Kommunikationsdaten gemeinsam durch das Klient-Steuergerät und einem Server-Steuergerät des fahrzeuginternen Netzwerks erfolgt und wobei das Verfahren zumindest die folgenden Schritte umfasst:
- Senden eines dem Anschein nach fehlerhaften Prüfsignals von dem Klient-Steuergerät an das Server-Steuergerät;
- Prüfen durch das Server-Steuergerät, ob das durch das Server-Steuergerät empfangene Prüfsignal dem von dem Klient-Steuergerät ausgesendeten Prüfsignal entspricht oder verändert wurde;
- Erzeugen einer Prüfantwort auf das empfangene Prüfsignal durch das Server-Steuergerät;
- Senden der erzeugten Prüfantwort von dem Server-Steuergerät an das Klient-Steuergerät);
wobei das Prüfen von Kommunikationsdaten, welche über den zumindest einen mit dem Steuergerät verbundenen Kommunikationskanal des Fahrzeugs übertragen werden, vorzugsweise das Prüfen der von dem Server-Steuergerät erzeugten Prüfantwort umfasst.

Die Erfindung macht sich die Erkenntnis zunutze, dass durch eine Überprüfung der übertragenen Kommunikationsdaten eine effektive und ressourcenschonende Erkennung von schadhaften Daten erfolgen kann, wenn die Datenerfordernisse über Regeln definiert werden. Dadurch, dass die Regeln veränderbar sind, kann eine bedarfsgerechte Anpassung oder Aktualisierung der Regeln an neuartige Angriffsmethoden oder Datenmuster erfolgen. Ferner ist das Risiko einer Fehldetektion eines Angriffs durch die Verwendung von veränderbaren Regeln erheblich verringert. Vorzugsweise erfolgt keine selbsttätige Anpassung der Regeln durch das Steuergerät oder das Fahrzeug. Die Regeln können beispielsweise Kommunikationsregeln sein, welche den Dateninhalt der Kommunikationsdaten betreffen. Die Regeln können auch Erfüllungsregeln sein, welche zu erfüllende Dateneigenschaften der Kommunikationsdaten definieren.

In einer bevorzugten Ausführungsform des erfindungsgemäßen Verfahrens wird dieses teilweise oder vollständig durch ein Angriffserfassungssystem des Fahrzeugs ausgeführt, welches signalleitend mit dem Steuergerät verbunden oder ein Bestandteil des Steuergeräts ist. Insbesondere erfolgt das Prüfen der Kommunikationsdaten in Echtzeit. Ferner ist es bevorzugt, dass die auf einer, mehreren oder sämtlichen Schichten einer OSI- (Open Systems Interconnection Model)-Struktur übertragenen Kommunikationsdaten gleichzeitig mittels des Verfahrens geprüft werden.

In einer besonders bevorzugten Ausführungsform des erfindungsgemäßen Verfahrens werden die über den zumindest einen Kommunikationskanal des Fahrzeugs übertragenen Kommunikationsdaten als ungefährlich oder unschädlich eingestuft, wenn die Kommunikationsdaten die Datenerfordernisse erfüllen. Alternativ oder zusätzlich werden die über den zumindest einen Kommunikationskanal des Fahrzeugs übertragenen Kommunikationsdaten als bösartig oder schädlich eingestuft, wenn die Kommunikationsdaten die Datenerfordernisse nicht erfüllen. Vorzugsweise erfüllen die Kommunikationsdaten die Datenerfordernisse nicht, wenn eine, mehrere oder sämtliche der Regeln durch die Kommunikationsdaten verletzt werden. Vorzugsweise erfolgt eine Bewertung der Kommunikationsdaten hinsichtlich ihrer potenziellen Schädlichkeit für das Steuergerät oder das Fahrzeug, wobei für die Bewertung die Anzahl und/oder die Intensität der Regelverletzungen durch die Kommunikationsdaten berücksichtigt werden.

Außerdem ist ein erfindungsgemäßes Verfahren bevorzugt, bei welchem der Empfang, der über den zumindest einen Kommunikationskanal des Fahrzeugs übertragenen Kommunikationsdaten durch das Steuergerät oder eine Steuereinheit des Steuergeräts zugelassen wird, wenn die über den zumindest einen Kommunikationskanal des Fahrzeugs übertragenen Kommunikationsdaten die Datenerfordernisse erfüllen. Alternativ oder zusätzlich wird der Empfang, der über den zumindest einen Kommunikationskanal des Fahrzeugs übertragenen Kommunikationsdaten durch das Steuergerät oder eine Steuereinheit des Steuergeräts verhindert, wenn die über den zumindest einen Kommunikationskanal des Fahrzeugs übertragenen Kommunikationsdaten die Datenerfordernisse nicht erfüllen. Durch das Verhindern des Empfangs wird erreicht, dass die schadhaften Daten das Steuergerät oder die Ziel-Steuereinheit des Steuergeräts nicht erreichen, sodass ein Funktionsausfall oder eine Funktionsbeeinträchtigung des Steuergeräts effektiv vermieden wird. Ferner kann das Verfahren das temporäre Unterbrechen der Kommunikation mit einer Datenquelle, deren über den zumindest einen Kommunikationskanal des Fahrzeugs übertragenen Kommunikationsdaten nicht die Datenerfordernisse erfüllen, umfassen. Ein temporäres Unterbrechen der Kommunikation kann beispielsweise dann sinnvoll sein, wenn die Datenquelle ein externes Gerät ist, welches in der Vergangenheit bereits Kommunikationsdaten an das Fahrzeug übertragen hat, jedoch selbst Opfer eines Cyberangriffs geworden ist. Die Kommunikationsunterbrechung kann beispielsweise aufgehoben werden, wenn die Aussendung von schadhaften Daten durch das externe Gerät unterbunden wird. Alternativ oder zusätzlich kann das Verfahren das dauerhafte Unterbinden der Kommunikation mit einer Datenquelle, deren über den zumindest einen Kommunikationskanal des Fahrzeugs übertragenen Kommunikationsdaten nicht die Datenerfordernisse erfüllen. Durch das dauerhafte Unterbinden der Kommunikation können auch spätere Angriffsversuche, welche von dieser Datenquelle ausgehen, effektiv abgewehrt werden.

Das erfindungsgemäße Verfahren wird ferner dadurch vorteilhaft weitergebildet, dass die eine oder die mehreren die Datenerfordernisse definierenden Regeln verändert werden. Alternativ oder zusätzlich können die eine oder die mehreren die Datenerfordernisse definierenden Regeln um eine oder mehrere weitere Regeln ergänzt werden. Außerdem können auch eine oder mehrere der die Datenerfordernisse definierenden Regeln gestrichen oder gelöscht werden. Vorteilhaft kann es außerdem sein, eine oder mehrere der die Datenerfordernisse definierenden Regeln auszutauschen. Das Verändern, Ergänzen, Streichen, Löschen und/oder Austauschen der Regeln erfolgt zur Anpassung der von den Kommunikationsdaten zu erfüllenden Datenerfordernisse an neuartige Angriffsmethoden und/oder neuartige Datenmuster schadhafter Kommunikationsdaten.

Ferner ist ein erfindungsgemäßes Verfahren bevorzugt, bei welchem die eine oder die mehreren die Datenerfordernisse definierenden Regeln mittels eines hardwarebasierten Vertrauensankers gegen Modifikationen geschützt sind. Der hardwarebasierte Vertrauensanker sorgt für eine hardwaregestützte Verschlüsselung und/oder Signatur des einen oder der mehreren die Datenerfordernisse definierenden Regeln. Auf diese Weise kann effektiv vermieden werden, dass die Regeln zur Modifikation der Datenerfordernisse geändert oder gestrichen bzw. gelöscht werden. Somit wird auch ein vorbereitender Angriff, welcher die Veränderung der zu erfüllenden Datenerfordernisse beabsichtigt, wirksam vermieden.

In einer anderen bevorzugten Ausführungsform des erfindungsgemäßen Verfahrens werden die Kommunikationsdaten, welche über den zumindest einen mit dem Steuergerät verbundenen Kommunikationskanal des Fahrzeugs übertragen und geprüft werden, über eine Kommunikationsschnittstelle des Fahrzeugs empfangen. Die Kommunikationsschnittstellen können beispielsweise mit einem als CAN-Bus, CAN-FD-Bus, Flexray-Bus und/oder einem als LIN-Bus ausgebildeten Kommunikationskanal des Fahrzeugs signalleitend verbunden sein. Alternativ oder zusätzlich kann die Kommunikationsschnittstelle eine Ethernet-Schnittstelle oder eine Kommunikationsschnittstelle eines Kommunikationsmoduls des Fahrzeugs sein, welches dazu eingerichtet ist, kabellos und/oder kabelgebunden mit externen Geräten zu kommunizieren. Alternativ oder zusätzlich können die Kommunikationsdaten, welche über den zumindest einen mit dem Steuergerät verbundenen Kommunikationskanal des Fahrzeugs übertragen und geprüft werden, fahrzeuginterne Daten sein, welche auf einem fahrzeuginternen Speicher hinterlegt sind oder durch das Fahrzeug erzeugt werden. Die fahrzeuginternen Daten können beispielsweise Protokolle, insbesondere Zugriffsprotokolle, Parameter und/oder Messwerte umfassen. Mittels des Verfahrens können somit sämtliche von außen in das Fahrzeug übertragenen Daten als auch sämtliche im Fahrzeug gespeicherte und durch das Fahrzeug selbst erzeugte Daten geprüft werden.

Erfindungsgemäß wird das Steuergerät als Klient-Steuergerät eines fahrzeuginternen Netzwerks betrieben, wobei das Prüfen der Kommunikationsdaten gemeinsam durch das Klient-Steuergerät und einem Server-Steuergerät des fahrzeuginternen Netzwerks erfolgt.

Erfindungsgemäß wird ein dem Anschein nach fehlerhaftes Prüfsignal von dem Klient-Steuergerät an das Server-Steuergerät gesendet und durch das Server-Steuergerät geprüft, ob das durch das Server-Steuergerät empfangene Prüfsignal dem von dem Klient-Steuergerät ausgesendeten Prüfsignal entspricht oder verändert wurde. Erfindungsgemäß umfasst das Verfahren das Erzeugen einer Prüfantwort auf das empfangene Prüfsignal durch das Server-Steuergerät und das Senden der erzeugten Prüfantwort von dem Server-Steuergerät an das Klient-Steuergerät, wobei das Prüfen von Kommunikationsdaten, welche über den zumindest einen mit dem Steuergerät verbundenen Kommunikationskanal des

Fahrzeugs übertragen werden, vorzugsweise das Prüfen der von dem Server-Steuergerät erzeugten Prüfantwort umfasst. Dadurch, dass ein dem Anschein nach fehlerhaftes Prüfsignal versendet wird, wird einem Hacker eine mögliche Angriffsmöglichkeit auf das Steuergerät bzw. auf das Fahrzeug suggeriert. Fehlerhafte Signale können mit schadhaften Daten ergänzt und/oder überlagert werden, um ein dem Anschein nach fehlerfreies Signal zu generieren. Wenn vorliegend ein dem Anschein nach fehlerfreies Signal von dem Server-Steuergerät empfangen wird, obwohl ein dem Anschein nach fehlerhaftes Prüfsignal ausgesendet wurde, kann auf das Einbringen schadhafter Daten geschlossen werden, wodurch ein Angriff festgestellt werden kann. Durch das absichtliche Senden eines dem Anschein nach fehlerhaften Prüfsignals wird eine sogenannte Honeypot-Strategie umgesetzt.

In einer weiteren bevorzugten Ausführungsform des erfindungsgemäßen Verfahrens wird das Prüfen der Kommunikationsdaten in einem Lastverteilungsmodus ausgeführt, in welchem nicht sämtliche, sondern lediglich einzelne Datenpakete hinsichtlich der Erfüllung der Datenerfordernisse geprüft werden. Beispielsweise kann hierbei jedes zweite oder dritte Datenpaket hinsichtlich der Erfüllung der Datenerfordernisse geprüft werden. Auf diese Weise wird die notwendige Rechenleistung erheblich verringert, sodass eine weitere Ressourcenschonung umgesetzt wird.

In einer weiteren bevorzugten Ausführungsform ist das erfindungsgemäße Verfahren ein computerimplementiertes Verfahren. In diesem Fall kann ein Computerprogrammprodukt umgesetzt werden, welches Befehle umfasst, die bei der Ausführung des Programms durch einen Computer, insbesondere einem Computer in einem Fahrzeug, diesen veranlassen, ein Verfahren nach einer der vorstehend beschriebenen Ausführungsformen auszuführen. Ferner kann hierdurch ein computerlesbares Speichermedium umgesetzt werden, welches Befehle umfasst, die bei der Ausführung durch einen Computer, insbesondere durch einen Computer in einem Fahrzeug, diesen veranlassen, ein Verfahren nach einem der vorstehend beschriebenen Ausführungsformen auszuführen.

Die der Erfindung zugrunde liegende Aufgabe wird ferner durch ein Kommunikationssystem der eingangs genannten Art gelöst, wobei das Kommunikationssystem dazu eingerichtet ist, das Verfahren zum Erfassen eines Angriffs, insbesondere eines Cyberangriffs auf ein Steuergerät eines Fahrzeugs nach einer der vorstehend beschriebenen Ausführungsformen auszuführen. Hinsichtlich der Vorteile und Modifikationen des erfindungsgemäßen Kommunikationssystems wird auf die Vorteile und Modifikationen des erfindungsgemäßen Verfahrens verwiesen.

Das erfindungsgemäße Kommunikationssystem umfasst
- zumindest ein Steuergerät, wobei das Steuergerät als Klient-Steuergerät eines fahrzeuginternen Netzwerks betrieben wird,
- zumindest ein Server-Steuergerät
   und
- ein Angriffserfassungssystem, welches teilweise in dem Klient-Steuergerät und teilweise in dem Server-Steuergerät integriert ist, welches Bestandteil des Steuergeräts oder mit dem Steuergerät signalleitend verbunden ist, wobei das Angriffserfassungssystem dazu eingerichtet ist, Kommunikationsdaten, welche über zumindest einen mit dem Steuergerät verbundenen Kommunikationskanal des Fahrzeugs übertragen werden, zu prüfen, wobei das Kommunikationssystem dazu eingerichtet ist, das beschriebene Verfahren zum Erfassen eines Angriffs, insbesondere eines Cyberangriffs, auf ein Steuergerät eines Fahrzeugs, auszuführen.

Die der Erfindung zugrunde liegende Aufgabe wird ferner durch ein Fahrzeug der eingangs genannten Art gelöst, wobei das Kommunikationssystem des Fahrzeugs nach einer der vorstehend beschriebenen Ausführungsformen ausgebildet ist. Hinsichtlich der Vorteile und Modifikationen des erfindungsgemäßen Fahrzeugs wird auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Kommunikationssystems in einer schematischen Darstellung;
- Fig. 2: ein Steuergerät in einer schematischen Darstellung;
- Fig. 3: ein weiteres Ausführungsbeispiel des erfindungsgemäßen Kommunikationssystems in einer schematischen Darstellung; und
- Fig. 4: eine Kommunikation zwischen einem Klient-Steuergerät und einer Server-Steuergerät entsprechend einem Ausführungsbeispiel des erfindungsgemäßen Verfahrens.

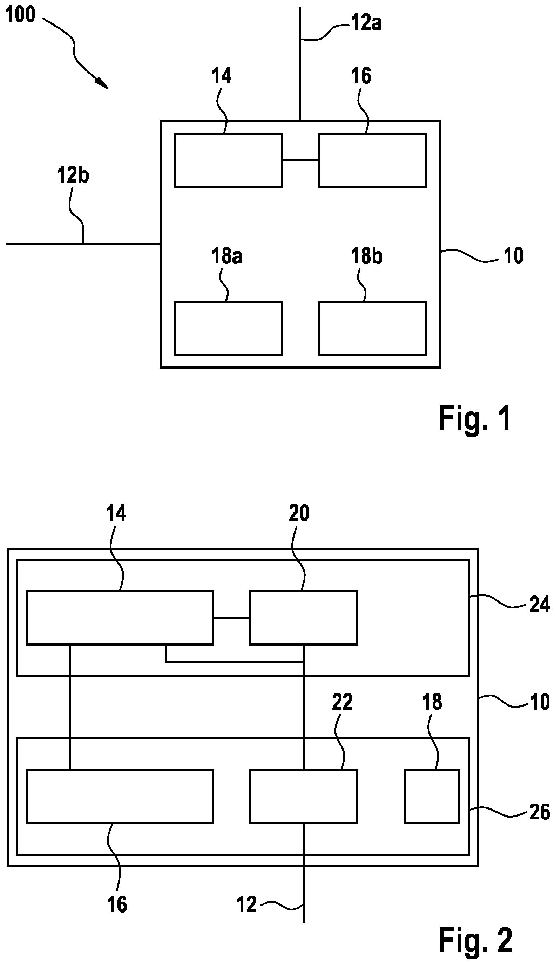

Die Fig. 1 zeigt ein Kommunikationssystem 100 für ein Fahrzeug, mit einem Steuergerät 10, welches ein Angriffserfassungssystem 14 aufweist. Das Angriffserfassungssystem 14 ist dazu eingerichtet, Kommunikationsdaten, welche über die mit dem Steuergerät 10 verbundenen Kommunikationskanäle 12a, 12b des Fahrzeugs übertragen werden, zu prüfen.

Bei der Prüfung der Kommunikationsdaten wird in Echtzeit untersucht, ob die Kommunikationsdaten Datenerfordernisse erfüllen, welche durch mehrere Regeln definiert sind. Das Angriffserfassungssystem 14 ist dazu eingerichtet, Kommunikationsdaten als ungefährlich oder unschädlich einzustufen, wenn die Kommunikationsdaten die Datenerfordernisse erfüllen. Andererseits ist das Angriffserfassungssystem 14 dazu eingerichtet, Kommunikationsdaten als bösartig oder schädlich einzustufen, wenn die Kommunikationsdaten die Datenerfordernisse nicht erfüllen.

Damit eine Anpassung der Regeln zum Schutz des Steuergeräts 10 vor neuen Angriffsmethoden und/oder neuen schadhaften Daten erfolgen kann, können die die Datenerfordernisse definierenden Regeln verändert, ergänzt, gestrichten beziehungsweise gelöscht und ausgetauscht werden.

Zur Vermeidung einer Modifikation der Regeln, welche eine entsprechende Änderung der Datenerfordernisse zur Folge hätte, durch einen Angreifer, sind die Regeln mittels eines hardwarebasierten Vertrauensankers gegen Modifikation geschützt. Der hardwarebasierte Vertrauensanker wird durch das Sicherheitsmodul 16 umgesetzt, welches signalleitend mit dem Angriffserfassungssystem 14 verbunden ist.

Neben dem Angriffserfassungssystem 14 und dem Sicherheitsmodul 16 weist das Steuergerät 10 außerdem mehrere Steuereinheiten 18a, 18b auf, welche potentielle Adressaten der Kommunikationsdaten darstellen. Grundsätzlich kann das Steuergerät eine Vielzahl von Steuereinheiten aufweisen, welche potentielle Adressaten der Kommunikationsdaten sein können. Wenn die Kommunikationsdaten als ungefährlich oder unschädlich eingestuft wurden, können diese beispielsweise an die Steuereinheiten 18a, 18b zu Umsetzung eines Steuervorgangs weiterleitet werden.

Die Fig. 2 zeigt ein Steuergerät 10, welches schematisch in einen Softwarestack 24 und Hardware 26 unterteilt ist.

Das Steuergerät 10 weist eine hardwareseitige Kommunikationsschnittstelle 22 auf, welche mit einem softwareseitigen Kommunikationsmodul 20 verbunden ist. Über die Kommunikationsschnittstelle 22 ist das Steuergerät mit einem Kommunikationskanal 12 verbunden, über welchen schädliche Daten auf das Steuergerät 10 gespielt werden können. Über das Kommunikationsmodul 20 werden die durch die Kommunikationsschnittstelle 22 empfangenen Kommunikationsdaten einem Angriffserfassungssystem 14 bereitgestellt.

Das Angriffserfassungssystem 14 ist dazu eingerichtet, in Echtzeit die Kommunikationsdaten dahingehend zu untersuchen, ob die Kommunikationsdaten Datenerfordernisse erfüllen, welche durch mehrere Regeln definiert sind. Das Angriffserfassungssystem 14 ist außerdem dazu eingerichtet, den Empfang der Kommunikationsdaten durch eine Steuereinheit 18 des Steuergeräts 10 zuzulassen, wenn die Kommunikationsdaten die Datenerfordernisse erfüllen, und den Empfang der Kommunikationsdaten durch die Steuereinheit 18 des Steuergeräts 10 zu verhindern, wenn die Kommunikationsdaten die Datenerfordernisse nicht erfüllen.

Die die Datenerfordernisse definierenden Regeln sind mittels eines hardwarebasierten Vertrauensankers gegen Modifikation geschützt. Hierzu weist das Steuergerät 10 ein hardwareseitiges Sicherheitsmodul 16 auf, welches die Regeln verschlüsselt.

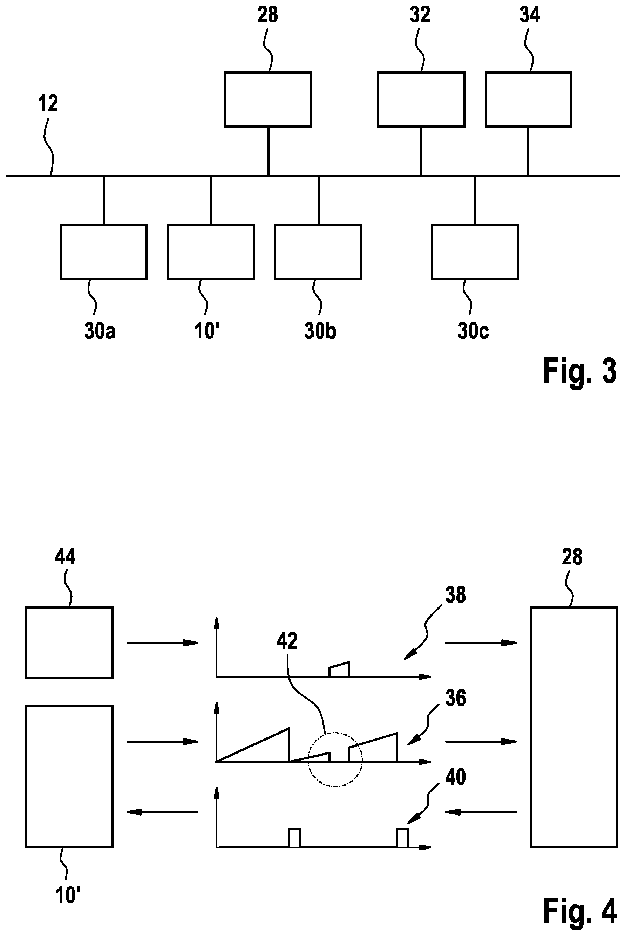

Die Fig. 3 zeigt einen als CAN-Bus ausgebildeten Kommunikationskanal 12, welcher mit mehreren Steuergeräten 10', 28, 30a-30c verbunden ist. Der Kommunikationskanal 12 ist außerdem mit einer Telematikeinrichtung 32 und einer Kommunikationsschnittstelle 34 verbunden. Die Kommunikationsschnittstelle 34 kann beispielsweise der Fahrzeug-zu-Fahrzeug-Kommunikation dienen und dazu eingerichtet sein, kabellos mit anderen Fahrzeugen Kommunikationsdaten auszutauschen.

Die über den Kommunikationskanal 12 des Fahrzeugs übertragenen und zu prüfenden Kommunikationsdaten können somit entweder über die Kommunikationsschnittstelle 34 des Fahrzeugs empfangen werden oder fahrzeuginterne Daten sein, welche beispielsweise auf einem fahrzeuginternen Speicher hinterlegt sind oder durch das Fahrzeug erzeugt werden, wobei die fahrzeuginternen Daten über den Kommunikationskanal 12 fahrzeugintern übertragen werden.

Das Steuergerät 10' wird als Klient-Steuergerät eines fahrzeuginternen Netzwerks betrieben. Das Prüfen der Kommunikationsdaten erfolgt in diesem Fall gemeinsam durch das Klient-Steuergerät 10' und einem Server-Steuergerät 28 des fahrzeuginternen Netzwerks. Das Angriffserfassungssystem ist somit teilweise in dem Klient-Steuergerät 10` und teilweise in dem Server-Steuergerät 28 integriert.

Vorliegend ist das Angriffserfassungssystem dazu ausgebildet, die Kommunikation mit einer Datenquelle, sofern diese identifizierbar ist, temporär zu unterbrechen oder dauerhaft zu unterbinden, wenn die von der Datenquelle über den Kommunikationskanal 12 übertragenden Kommunikationsdaten nicht die Datenerfordernisse erfüllen. Auf diese Weise können andere Geräte, welche dauerhaft oder temporär schädliche Kommunikationsdaten aussenden, temporär oder dauerhaft von der Kommunikation ausgeschlossen werden.

Die Fig. 4 zeigt die Aussendung eines dem Anschein nach fehlerhaften Prüfsignals 36 von einem Klient-Steuergerät 10' an ein Server-Steuergerät 28. Das dem Anschein nach fehlerhafte Prüfsignal 36 weist einen Signalfehler 42 auf, welcher von einem Angreifer 44 ausgenutzt werden kann.

Der Angreifer 44 sendet eine das dem Anschein nach fehlerhafte Prüfsignal ergänzende Signalergänzung 38 aus. Das von dem Server-Steuergerät 28 empfangene Prüfsignal stellt sich aufgrund der Signalergänzung 38 nunmehr als fehlerfrei dar. Das Server-Steuergerät 28 ist dazu eingerichtet, auf das empfangene Prüfsignal 36 eine Prüfantwort 40 zu erzeugen und an das Klient-Steuergerät 10' zu senden. Vorliegend ist das Server-Steuergerät dazu eingerichtet, bei jedem Nullkontakt des Prüfsignals 36 einen kurzen Signalimpuls in der Prüfantwort 40 zu erzeugen.

Das Klient-Steuergerät 10` kann nunmehr erkennen, dass das dem Anschein nach fehlerhafte Prüfsignal 36 durch einen Angreifer 44 verändert wurde, da die Prüfantwort 40 nicht der erwarteten Prüfantwort entspricht. Da die empfangene Prüfantwort 40 von der erwarteten Prüfantwort abweicht, kann also darauf geschlossen werden, dass eine Signalveränderung durch einen Angreifer 44 stattgefunden hat und die empfangenen Kommunikationsdaten bösartig oder schädlich sind.

Dadurch, dass ein dem Anschein nach fehlerhaftes Prüfsignal 36 ausgesendet wird, wird der Angreifer 44 dazu verleitetet, den Signalfehler 42 des Prüfsignals 36 auszunutzen. Aufgrund der absichtlichen Aussendung dieses Signals wird auf diese Wiese eine sogenannte Honeypot-Funktionalität umgesetzt, mit welcher der Angreifer 44 zur Ausführung erwarteter Angriffe verleitet wird.

### Bezugszeichenliste

- 10: Steuergerät
- 10': Klient-Steuergerät
- 12, 12a, 12b: Kommunikationskanäle
- 14: Angriffserfassungssystem
- 16: Sicherheitsmodul
- 18, 18a, 18b: Steuereinheiten
- 20: Kommunikationsmodul
- 22: Kommunikationsschnittstelle
- 24: Softwarestack
- 26: Hardware
- 28: Server-Steuergerät
- 30a-30c: sonstige Steuergeräte
- 32: Telematikeinrichtung
- 34: Kommunikationsschnittstelle
- 36: Prüfsignal
- 38: Signalergänzung
- 40: Prüfantwort
- 42: Signalfehler
- 44: Angreifer
- 100: Kommunikationssystem

## Patentansprüche

1. Verfahren zum Erfassen eines Angriffs, insbesondere eines Cyberangriffs, auf ein Steuergerät (10) eines Fahrzeugs, mit dem Schritt:
- Prüfen von Kommunikationsdaten, welche über zumindest einen mit dem Steuergerät (10) verbundenen Kommunikationskanal (12, 12a, 12b) des Fahrzeugs übertragen werden;
wobei das Prüfen der Kommunikationsdaten, welche über den zumindest einen mit dem Steuergerät (10) verbundenen Kommunikationskanal (12, 12a, 12b) des Fahrzeugs übertragen werden, den folgenden Schritt umfasst:
- Untersuchen, ob die über den zumindest einen Kommunikationskanal (12, 12a, 12b) des Fahrzeugs übertragenen Kommunikationsdaten Datenerfordernisse erfüllen, welche durch eine oder mehrere veränderbare Regeln definiert sind,
**dadurch gekennzeichnet, dass**
das Steuergerät (10) als Klient-Steuergerät (10') eines fahrzeuginternen Netzwerks betrieben wird, wobei das Prüfen der Kommunikationsdaten gemeinsam durch das Klient-Steuergerät (10`) und einem Server-Steuergerät (28) des fahrzeuginternen Netzwerks erfolgt, wobei das Verfahren zumindest die folgenden Schritte umfasst:
- Senden eines dem Anschein nach fehlerhaften Prüfsignals (36) von dem Klient-Steuergerät (10`) an das Server-Steuergerät (28);
- Prüfen durch das Server-Steuergerät (28), ob das durch das Server-Steuergerät (28) empfangene Prüfsignal (36) dem von dem Klient-Steuergerät (10') ausgesendeten Prüfsignal (36) entspricht oder verändert wurde;
- Erzeugen einer Prüfantwort (40) auf das empfangene Prüfsignal (36) durch das Server-Steuergerät (28);
- Senden der erzeugten Prüfantwort (40) von dem Server-Steuergerät (28) an das Klient-Steuergerät (10');
wobei das Prüfen von Kommunikationsdaten, welche über den zumindest einen mit dem Steuergerät (10) verbundenen Kommunikationskanal (12, 12a, 12b) des Fahrzeugs übertragen werden, vorzugsweise das Prüfen der von dem Server-Steuergerät (28) erzeugten Prüfantwort (40) umfasst.

2. Verfahren nach Anspruch 1,
**gekennzeichnet durch** zumindest einen der folgenden Schritte:
- Einstufen der über den zumindest einen Kommunikationskanal (12, 12a, 12b) des Fahrzeugs übertragenen Kommunikationsdaten als ungefährlich oder unschädlich, wenn die Kommunikationsdaten die Datenerfordernisse erfüllen;
- Einstufen der über den zumindest einen Kommunikationskanal (12, 12a, 12b) des Fahrzeugs übertragenen Kommunikationsdaten als bösartig oder schädlich, wenn die Kommunikationsdaten die Datenerfordernisse nicht erfüllen.

3. Verfahren nach Anspruch 1 oder 2,
**gekennzeichnet durch** zumindest einen der folgenden Schritte:
- Zulassen des Empfangs der über den zumindest einen Kommunikationskanal (12, 12a, 12b) des Fahrzeugs übertragenen Kommunikationsdaten durch das Steuergerät (10) oder eine Steuereinheit (18, 18a, 18b) des Steuergeräts (10), wenn die über den zumindest einen Kommunikationskanal (12, 12a, 12b) des Fahrzeugs übertragenen Kommunikationsdaten die Datenerfordernisse erfüllen;
- Verhindern des Empfangs der über den zumindest einen Kommunikationskanal (12, 12a, 12b) des Fahrzeugs übertragenen Kommunikationsdaten durch das Steuergerät (10) oder eine Steuereinheit (18, 18a, 18b) des Steuergeräts (10), wenn die über den zumindest einen Kommunikationskanal (12, 12a, 12b) des Fahrzeugs übertragenen Kommunikationsdaten die Datenerfordernisse nicht erfüllen;
- temporäres Unterbrechen oder dauerhaftes Unterbinden der Kommunikation mit einer Datenquelle, deren über den zumindest einen Kommunikationskanal (12, 12a, 12b) des Fahrzeugs übertragenen Kommunikationsdaten nicht die Datenerfordernisse erfüllen.

4. Verfahren nach einem der vorstehenden Ansprüche,
**gekennzeichnet durch** zumindest einen der folgenden Schritte:
- Verändern der einen oder der mehreren die Datenerfordernisse definierenden Regeln;
- Ergänzen der einen oder der mehreren die Datenerfordernisse definierenden Regeln um eine oder mehrere weitere Regeln;
- Streichen oder Löschen einer oder mehrerer der die Datenerfordernisse definierenden Regeln;
- Austauschen einer oder mehrerer der die Datenerfordernisse definierenden Regeln.

5. Verfahren nach einem der vorstehenden Ansprüche,
**dadurch gekennzeichnet, dass** die eine oder die mehreren die Datenerfordernisse definierenden Regeln mittels eines hardwarebasierten Vertrauensankers gegen Modifikation geschützt sind.

6. Verfahren nach einem der vorstehenden Ansprüche,
**dadurch gekennzeichnet, dass** die Kommunikationsdaten, welche über den zumindest einen mit dem Steuergerät (10) verbundenen Kommunikationskanal (12, 12a, 12b) des Fahrzeugs übertragen und geprüft werden, über eine Kommunikationsschnittstelle (34) des Fahrzeugs empfangen werden und/oder fahrzeuginterne Daten sind, welche auf einem fahrzeuginternen Speicher hinterlegt sind oder durch das Fahrzeug erzeugt werden.

7. Kommunikationssystem (100) für ein Fahrzeug, mit
- zumindest einem Steuergerät (10), wobei das Steuergerät als Klient-Steuergerät (10') eines fahrzeuginternen Netzwerks betrieben wird,
- zumindest einem Server-Steuergerät (28)
und
- einem Angriffserfassungssystem (14), welches teilweise in dem Klient-Steuergerät (10 `) und teilweise in dem Server-Steuergerät (28) integriert ist, wobei das Angriffserfassungssystem (14) dazu eingerichtet ist, Kommunikationsdaten, welche über zumindest einen mit dem Steuergerät (10) verbundenen Kommunikationskanal (12, 12a, 12b) des Fahrzeugs übertragen werden, zu prüfen,
**dadurch gekennzeichnet, dass** das Kommunikationssystem (100) dazu eingerichtet ist, das Verfahren zum Erfassen eines Angriffs, insbesondere eines Cyberangriffs, auf ein Steuergerät (10) eines Fahrzeugs nach einem der vorstehenden Ansprüchen auszuführen.

8. Fahrzeug, insbesondere Automobil, mit
- einem Kommunikationssystem (100),
**dadurch gekennzeichnet, dass** das Kommunikationssystem (100) nach Anspruch 7 ausgebildet ist.

## Claims

1. Method for detecting an attack, in particular a cyber-attack, on a control device (10) of a vehicle, with the step of:
- checking communication data that are transmitted via at least one communication channel (12, 12a, 12b) of the vehicle that is connected to the control device (10);
wherein the checking of the communication data that are transmitted via the at least one communication channel (12, 12a, 12b) of the vehicle that is connected to the control device (10) comprises the following step:
- examining whether the communication data transmitted via the at least one communication channel (12, 12a, 12b) of the vehicle fulfil data requirements that are defined by one or a plurality of changeable rules,
**characterized in that**
the control device (10) is operated as a client control device (10') of a network internal to the vehicle, wherein the checking of the communication data takes place jointly by the client control device (10') and by a server control device (28) of the network internal to the vehicle, wherein the method comprises at least the following steps:
- transmitting an apparently erroneous check signal (36) from the client control device (10') to the server control device (28);
- checking by the server control device (28) whether the check signal (36) received by the server control device (28) corresponds to the check signal (36) transmitted by the client control device (10') or has been changed;
- generating a check response (40) to the received check signal (36) by the server control device (28);
- transmitting the generated check response (40) from the server control device (28) to the client control device (10');
wherein the checking of communication data that have been transmitted via the at least one communication channel (12, 12a, 12b) of the vehicle that is connected to the control device (10) preferably comprises checking the check response (40) generated by the server control device (28).

2. Method according to Claim 1,
**characterized by** at least one of the following steps:
- classifying the communication data transmitted via the at least one communication channel (12, 12a, 12b) of the vehicle as non-hazardous or harmless if the communication data fulfil the data requirements;
- classifying the communication data transmitted via the at least one communication channel (12, 12a, 12b) of the vehicle as malicious or harmful if the communication data do not fulfil the data requirements.

3. Method according to Claim 1 or 2,
**characterized by** at least one of the following steps:
- allowing the reception of the communication data transmitted via the at least one communication channel (12, 12a, 12b) of the vehicle by the control device (10) or a control unit (18, 18a, 18b) of the control device (10) if the communication data transmitted via the at least one communication channel (12, 12a, 12b) of the vehicle fulfil the data requirements;
- preventing the reception of the communication data transmitted via the at least one communication channel (12, 12a, 12b) of the vehicle by the control device (10) or a control unit (18, 18a, 18b) of the control device (10) if the communication data transmitted via the at least one communication channel (12, 12a, 12b) of the vehicle do not fulfil the data requirements;
- temporarily interrupting or permanently preventing the communication with a data source whose communication data, transmitted via the at least one communication channel (12, 12a, 12b) of the vehicle, do not fulfil the data requirements.

4. Method according to one of the preceding claims,
**characterized by** at least one of the following steps:
- changing the one or the plurality of rules that define the data requirements;
- supplementing the one or the plurality of rules that define the data requirements with one or a plurality of further rules;
- cancelling or deleting one or a plurality of the rules defining the data requirements;
- exchanging one or a plurality of the rules defining the data requirements.

5. Method according to one of the preceding claims,
**characterized in that** one or the plurality of rules defining the data requirements are protected against modification by means of a hardware-based trust anchor.

6. Method according to one of the preceding claims,
**characterized in that** the communication data that are transmitted via the at least one communication channel (12, 12a, 12b) of the vehicle that is connected to the control device (10) and checked are data received via a communication interface (34) of the vehicle and/or data that are internal to the vehicle that are stored in a memory internal to the vehicle or which are generated by the vehicle.

7. Communication system (100) for a vehicle, with
- at least one control device (10), wherein the control device is operated as a client control device (10') of a network internal to the vehicle,
- at least one server control device (28)
and
- an attack detection system (14) that is integrated partially in the client control device (10) and partially in the server control device (28), wherein the attack detection system (14) is configured to check communication data that are transmitted via at least one communication channel (12, 12a, 12b) of the vehicle that is connected to the control device (10),
**characterized in that** the communication system (100) is configured to carry out the method for detecting an attack, in particular a cyber-attack, on a control device (10) of a vehicle according to one of the preceding claims.

8. Vehicle, in particular automobile, with
- a communication system (100),
**characterized in that** the communication system (100) is designed according to Claim 7.

## Revendications

1. Procédé permettant de détecter une attaque, en particulier une cyberattaque, contre un appareil de commande (10) d'un véhicule, comprenant l'étape consistant à :
- vérifier des données de communication qui sont transmises par au moins un canal de communication (12, 12a, 12b) du véhicule, relié à l'appareil de commande (10) ;
dans lequel la vérification des données de communication qui sont transmises par ledit au moins un canal de communication (12, 12a, 12b) du véhicule, relié à l'appareil de commande (10), comprend l'étape suivante consistant à :
- examiner si les données de communication transmises par ledit au moins un canal de communication (12, 12a, 12b) du véhicule satisfont des exigences en matière de données qui sont définies par une ou plusieurs règles modifiables,
**caractérisé en ce que**
l'appareil de commande (10) fonctionne comme un appareil de commande client (10') d'un réseau interne au véhicule, dans lequel la vérification des données de communication est effectuée en commun par l'appareil de commande client (10') et un appareil de commande serveur (28) du réseau interne au véhicule, le procédé comprenant au moins les étapes suivantes consistant à :
- envoyer un signal de vérification (36) apparemment erroné de l'appareil de commande client (10') à l'appareil de commande serveur (28) ;
- vérifier par l'appareil de commande serveur (28) si le signal de vérification (36) reçu par l'appareil de commande serveur (28) correspond au signal de vérification (36) émis par l'appareil de commande client (10') ou s'il a été modifié ;
- générer une réponse de vérification (40) au signal de vérification reçu (36) par l'appareil de commande serveur (28) ;
- envoyer la réponse de vérification (40) générée de l'appareil de commande serveur (28) à l'appareil de commande client (10') ;
dans lequel la vérification de données de communication qui sont transmises par ledit au moins un canal de communication (12, 12a, 12b) du véhicule, relié à l'appareil de commande (10), comprend de préférence la vérification de la réponse de vérification (40) générée par l'appareil de commande serveur (28).

2. Procédé selon la revendication 1, **caractérisé par** au moins l'une des étapes suivantes consistant à :
- classifier les données de communication transmises par ledit au moins un canal de communication (12, 12a, 12b) du véhicule comme étant sans danger ou inoffensives si les données de communication satisfont les exigences en matière de données ;
- classifier les données de communication transmises par ledit au moins un canal de communication (12, 12a, 12b) du véhicule comme malveillantes ou dangereuses si les données de communication ne satisfont pas les exigences en matière de données.

3. Procédé selon la revendication 1 ou 2, **caractérisé par** au moins l'une des étapes suivantes consistant à :
- autoriser la réception des données de communication transmises par ledit au moins un canal de communication (12, 12a, 12b) du véhicule, par l'appareil de commande (10) ou une unité de commande (18, 18a, 18b) de l'appareil de commande (10) si les données de communication transmises par ledit au moins un canal de communication (12, 12a, 12b) du véhicule satisfont les exigences en matière de données ;
- empêcher la réception des données de communication transmises par ledit au moins un canal de communication (12, 12a, 12b) du véhicule, par l'appareil de commande (10) ou une unité de commande (18, 18a, 18b) de l'appareil de commande (10) si les données de communication transmises par ledit au moins un canal de communication (12, 12a, 12b) du véhicule ne satisfont pas les exigences en matière de données ;
- interrompre de façon temporaire ou permanente la communication avec une source de données dont les données de communication transmises par ledit au moins un canal de communication (12, 12a, 12b) du véhicule ne satisfont pas les exigences en matière de données.

4. Procédé selon l'une quelconque des revendications précédentes, **caractérisé par** au moins l'une des étapes suivantes consistant à :
- modifier ladite une ou les plusieurs règles définissant les exigences en matière de données ;
- compléter ladite une ou les plusieurs règles définissant les exigences en matière de données par une ou plusieurs autres règles ;
- supprimer ou effacer une ou plusieurs des règles définissant les exigences en matière de données ;
- remplacer une ou plusieurs règles définissant les exigences en matière de données.

5. Procédé selon l'une quelconque des revendications précédentes, **caractérisé en ce que** ladite une ou les plusieurs règles définissant les exigences en matière de données sont protégées contre toute modification au moyen d'un certificat approuvé basé sur le matériel.

6. Procédé selon l'une quelconque des revendications précédentes, **caractérisé en ce que** les données de communication qui sont transmises et vérifiées par ledit au moins un canal de communication (12, 12a, 12b) du véhicule, relié à l'appareil de commande (10), sont reçues par une interface de communication (34) du véhicule et/ou sont des données internes au véhicule qui sont stockées sur une mémoire interne au véhicule ou sont générées par le véhicule.

7. Système de communication (100) pour un véhicule, comprenant
- au moins un appareil de commande (10), l'appareil de commande fonctionnant comme un appareil de commande client (10') d'un réseau interne au véhicule,
- au moins un appareil de commande serveur (28), et
- un système de détection d'attaque (14) qui est intégré en partie dans l'appareil de commande client (10') et en partie dans l'appareil de commande serveur (28), le système de détection d'attaque (14) étant conçu pour vérifier des données de communication qui sont transmises par au moins un canal de communication (12, 12a, 13b) du véhicule, relié à l'appareil de commande (10),
**caractérisé en ce que** le système de communication (100) est conçu pour effectuer le procédé de détection d'une attaque, en particulier d'une cyberattaque, contre un appareil de commande (10) d'un véhicule selon l'une quelconque des revendications précédentes.

8. Véhicule, en particulier véhicule automobile, comprenant
- un système de communication (100),
**caractérisé en ce que** le système de communication (100) est réalisé selon la revendication 7.
